(19)

Europäisches Patentamt

European Patent Office

Office européen des brevets

(11) **EP 4 518 452 A1**

(12) **EUROPEAN PATENT APPLICATION**
published in accordance with Art. 153(4) EPC

(43) Date of publication:
**05.03.2025 Bulletin 2025/10**

(21) Application number: **23796732.8**

(22) Date of filing: **24.04.2023**

(51) International Patent Classification (IPC):
*H04W 52/02* (2009.01)    *H04W 72/23* (2023.01)
*H04W 76/28* (2018.01)    *H04B 7/06* (2006.01)
*H04W 24/08* (2009.01)    *H04L 5/00* (2006.01)

(52) Cooperative Patent Classification (CPC):
**H04B 7/06; H04L 5/00; H04W 24/08; H04W 52/02;
H04W 72/23; H04W 76/28**

(86) International application number:
**PCT/KR2023/005538**

(87) International publication number:
**WO 2023/211085 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.04.2022  KR 20220052413
             28.04.2022  KR 20220053003
             11.08.2022  KR 20220100475
             04.11.2022  KR 20220146477

(71) Applicant: **LG Electronics Inc.
Yeongdeungpo-gu
Seoul 07336 (KR)**

(72) Inventors:
• **MYUNG, Sechang
  Seoul 06772 (KR)**
• **KIM, Seonwook
  Seoul 06772 (KR)**
• **LEE, Youngdae
  Seoul 06772 (KR)**
• **KIM, Kijun
  Seoul 06772 (KR)**
• **KIM, Jaehyung
  Seoul 06772 (KR)**
• **YANG, Suckchel
  Seoul 06772 (KR)**
• **HWANG, Seunggye
  Seoul 06772 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD FOR TRANSMITTING AND RECEIVING UPLINK CHANNEL AND DOWNLINK CHANNEL, AND DEVICE THEREFOR**

(57)    Disclosed is a method for transmitting an uplink (UL) signal or receiving a downlink (DL) signal by a terminal in a wireless communication system. Particularly, the method may comprise: receiving information related to at least one first time interval unavailable for the transmission or reception; and transmitting the UL signal or receiving the DL signal through at least one second time interval other than the at least one first time interval, wherein the transmission of the UL signal and the reception of the DL signal are not performed in the at least one first time interval, and the information related to the at least one first time interval is received through downlink control information (DCI) or a medium access control-control element (MAC-CE).

**FIG. 9**

Pattern#1

Pattern#2

Pattern#3

▨ : ON
▢ : OFF

EP 4 518 452 A1

Description

[TECHNICAL FIELD]

The disclosure relates to a method and apparatus for transmitting and receiving an uplink (UL) channel and a downlink (DL) channel, and more particularly, to a method and apparatus for notifying a user equipment (UE) whether each of one or more time durations is ON/OFF and transmitting and receiving a DL/UL channel based on whether each of the one or more time durations is ON/OFF, for network energy saving (NES).

[BACKGROUND]

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

[DISCLOSURE]

[Technical Problem]

An object of the disclosure is to provide a method of transmitting and receiving uplink and downlink channels and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

[Technical Solution]

A method of transmitting an uplink (UL) signal or receiving a downlink (DL) signal by a user equipment (UE) in a wireless communication system according to an embodiment of the disclosure may include receiving information related to at least one unavailable first time duration, and transmitting the UL signal or receiving the DL signal during at least one second time duration other than the at least one first time duration. A transmission of the UL signal and a reception of the DL signal may not be performed during the at least one first time duration, and the information related to the at least one first time duration may be received through downlink control information (DCI) or a medium access control-control element (MAC-CE).

The at least one first time duration may be one of a plurality of unavailable first time durations, indicated by the information.

Further, the at least one first time duration may be at least one symbol indicated as unavailable by a slot format indicator (SFI).

Further, the at least one second time duration may be at least one symbol that is after expiration of a timer corresponding to the at least one first time duration.

Further, based on the DL signal being a synchronization signal block (SSB) or a channel state information-reference signal (CSI-RS) or the UL signal being a physical random access channel (PRACH), the reception of the DL signal and the transmission of the UL signal may be performed during the at least one first time duration.

Further, based on a physical downlink control channel (PDCCH) being monitored during the at least one first time duration, a periodicity of a search space (SS) set for the at least one first time duration may be greater than a periodicity of an SS set for the at least one second time duration.

Further, the information related to the at least one first time duration may be for indicating a pattern including the at least one first time duration and the at least one second time duration, and information about a duration during which the pattern is applied may also be received through the DCI or the MAC-CE.

Further, a UL transmission or a DL reception may be performed in a time resource after an ending time of the duration.

Further, a UL transmission or a DL reception may be performed based on a pattern different from the pattern and a duration corresponding to the different pattern, after an ending time of the duration. A UE for transmitting a UL signal or receiving a DL signal in a wireless communication system according to the disclosure may include at least one transceiver, at least one processor, and at least one memory operably connected to the at least one processor and storing instructions which when executed, cause the at least one processor to perform operations. The operations may include receiving information related to at least one unavailable first time duration through the at least one transceiver, and transmitting the UL signal or receiving the DL signal through the at least one transceiver during at least one second time duration other than the at least one first time duration. A transmission of the UL signal and a reception of the DL signal may not be performed during the at least one first time duration, and the information related to the at least one first time duration is received through DCI or a MAC-CE.

The at least one first time duration may be one of a plurality of unavailable first time durations, indicated by the information.

Further, the at least one first time duration may be at least one symbol indicated as unavailable by an SFI.

Further, the at least one second time duration may be at least one symbol that is after expiration of a timer corresponding to the at least one first time duration.

Further, based on the DL signal being an SSB or a CSI-RS or the UL signal being a PRACH, the reception of the DL signal and the transmission of the UL signal may be performed during the at least one first time duration.

Further, based on a PDCCH being monitored during the at least one first time duration, a periodicity of an SS set for the at least one first time duration may be greater than a periodicity of an SS set for the at least one second time duration.

Further, the information related to the at least one first time duration may be for indicating a pattern including the at least one first time duration and the at least one second time duration, and information about a duration during which the pattern is applied may also be received through the DCI or the MAC-CE.

Further, a UL transmission or a DL reception may be performed in a time resource after an ending time of the duration.

Further, a UL transmission or a DL reception may be performed based on a pattern different from the pattern and a duration corresponding to the different pattern, after an ending time of the duration.

A method of receiving a UL signal or transmitting a DL signal by a BS in a wireless communication system according to an embodiment of the disclosure may include transmitting information related to at least one unavailable time duration, and receiving the UL signal or transmitting the DL signal during a time duration other than the at least one time duration. A reception of the UL signal and a transmission of the DL signal may not be performed during the at least one time duration, and the information related to the at least one time duration may be transmitted through DCI or a MAC-CE.

A BS for receiving a UL signal or transmitting a DL signal in a wireless communication system according to the disclosure may include at least one transceiver, at least one processor, and at least one memory operably connected to the at least one processor and storing instructions which when executed, cause the at least one processor to perform operations. The operations may include transmitting information related to at least one unavailable time duration through the at least one transceiver, and receiving the UL signal or transmitting the DL signal through the at least one transceiver during a time duration other than the at least one time duration. A reception of the UL signal and a transmission of the DL signal may not be performed during the at least one time duration, and the information related to the at least one time duration may be transmitted through DCI or a MAC-CE.

A computer-readable storage medium according to the disclosure may include at least one computer program causing at least one processor to perform operations. The operations may include receiving information related to at least one unavailable time duration, and transmitting the UL signal or receiving the DL signal during a time duration other than the at least one time duration. A transmission of the UL signal and a reception of the DL signal may not be performed during the at least one time duration, and the information related to the at least one time duration may be received through DCI or a MAC-CE.

An apparatus for transmitting a UL signal or receiving a DL signal in a wireless communication system according to the disclosure may include at least one processor, and at least one memory operably connected to the at least one processor and storing instructions which when executed, cause the at least one processor to perform operations. The operations may include receiving information related to at least one unavailable time duration, and transmitting the UL signal or receiving the DL signal during a time duration other than the at least one time duration. A transmission of the UL signal and a reception of the DL signal may not be performed during the at least one time duration, and the information related to the at least one time duration may be received through DCI or a MAC-CE.

**[Advantageous Effects]**

According to the disclosure, a method of transmitting and transmitting a DL/UL channel based on not semi-static but dynamic ON/OFF of each of one or more time durations, for an NES operation of a BS is proposed to reduce the power consumption of the BS and a UE.

Further, transmission and reception optimized for an NES mode may be performed by defining a different penalty from a legacy penalty for a UE which has failed to receive a response to a physical random access channel (PRACH)/scheduling request (SR) due to an OFF duration.

Further, a method of enabling a UE supporting no NES operation to access an NES-mode BS is provided so that the legacy UE may also efficiently operate in the NES mode.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

## [BRIEF DESCRIPTION OF THE DRAWINGS]

FIG. 1 illustrates physical channels and a general signal transmission method using the physical channels in a 3GPP system as an example of a wireless communication system.

FIG. 2 illustrates a radio frame structure.

FIG. 3 illustrates a resource grid during the duration of a slot.

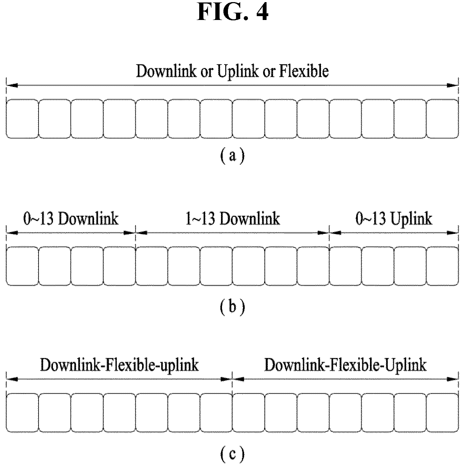

FIG. 4 illustrates DCI format 2_0.

FIG. 5 illustrates network energy saving.

FIGS. 6 to 8 illustrate overall operation procedures of a user equipment (UE) and a base station (BS) according to an embodiment of the disclosure.

FIG. 9 illustrates exemplary ON/OFF patterns according to an embodiment of the disclosure.

FIG. 10 illustrates an exemplary communication system applied to the disclosure;

FIG. 11 illustrates an exemplary wireless device applicable to the disclosure; and

FIG. 12 illustrates an exemplary vehicle or autonomous driving vehicle applicable to the disclosure.

## [DETAILED DESCRIPTION]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

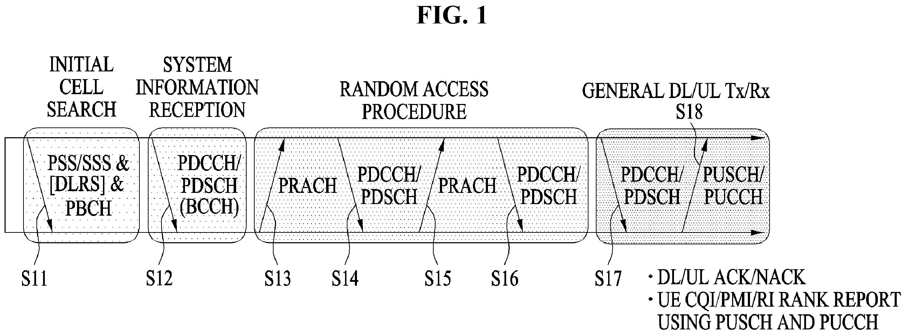

FIG. 1 illustrates physical channels and a general signal transmission method using the physical channels in a 3GPP system.

When a UE is powered on or enters a new cell, the UE performs initial cell search (S11). The initial cell search involves acquisition of synchronization to a BS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the UE may acquire information broadcast in the cell by receiving the PBCH from the BS. During the initial cell search, the UE may also monitor a DL channel state by receiving a downlink reference signal (DL RS).

After the initial cell search, the UE may acquire more detailed system information by receiving a physical downlink control channel (PDCCH) and a physical downlink shared channel (PDSCH) corresponding to the PDCCH (S12).

Subsequently, to complete connection to the BS, the UE may perform a random access procedure with the BS (S13 to S16). Specifically, the UE may transmit a preamble on a physical random access channel (PRACH) (S13) and may receive a PDCCH and a random access response (RAR) for the preamble on a PDSCH corresponding to the PDCCH (S14). The UE may then transmit a physical uplink shared channel (PUSCH) by using scheduling information in the RAR (S15), and perform a contention resolution procedure including reception of a PDCCH and a PDSCH signal corresponding to the PDCCH (S16).

When the random access procedure is performed in two steps, steps S13 and S15 may be performed as one step (in which Message A is transmitted by the UE), and steps S14 and S16 may be performed as one step (in which Message B is transmitted by the BS).

After the above procedure, the UE may receive a PDCCH and/or a PDSCH from the BS (S17) and transmit a physical uplink shared channel (PUSCH) and/or a physical uplink control channel (PUCCH) to the BS (S18), in a general UL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the UE may transmit the UCI aperiodically on the PUSCH, upon receipt of a request/command from a network.

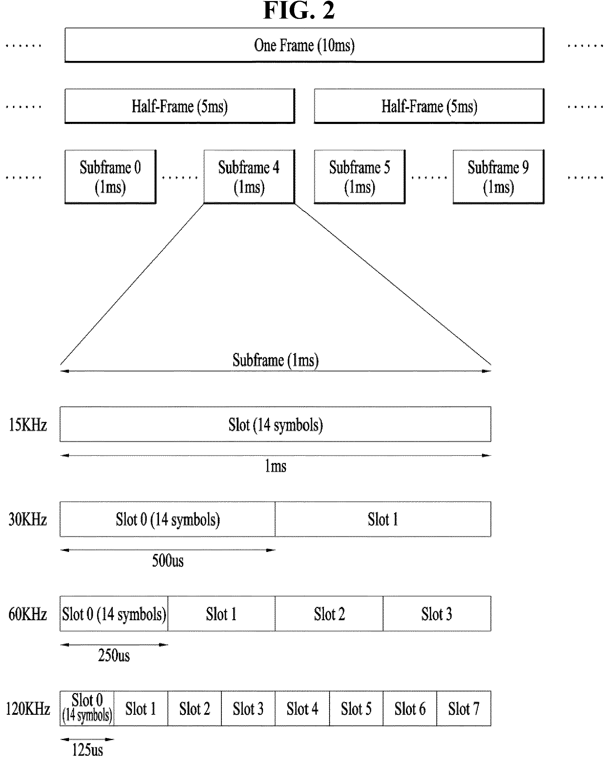

FIG. 2 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | N$^{slot}_{symb}$ | N$^{frame,u}_{slot}$ | N$^{subframe,u}_{slot}$ |
|---|---|---|---|
| 60KHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450 MHz - 7125 MHz | 15, 30, 60 kHz |
| FR2 | 24250 MHz - 52600 MHz | 60, 120, 240 kHz |

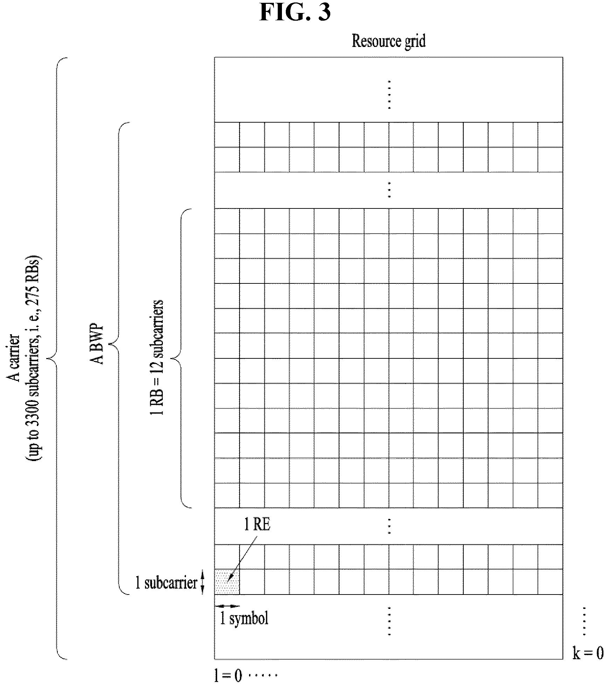

FIG. 3 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

Now, a detailed description will be given of physical channels.

**DL Channel Structures**

An eNB transmits related signals on later-described DL channels to a UE, and the UE receives the related signals on the DL channels from the eNB.

(1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

(2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.

- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.
- pdcch-DMRS-ScramblingID: provides information used for initialization of a PDCCH DMRS scrambling sequence.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.

- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.
Table 5 illustrates exemplary DCI formats transmitted on the PDCCH.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

**UL Channel Structures**

A UE transmits a related signal to the BS on a UL channel, which will be described later, and the BS receives the related signal from the UE through the UL channel to be described later.

(1) Physical Uplink Control Channel (PUCCH)

The PUCCH carries UCI, HARQ-ACK and/or scheduling request (SR), and is divided into a short PUCCH and a long PUCCH according to the PUCCH transmission length.
The UCI includes the following information.

- SR: information used to request UL-SCH resources.

- HARQ-ACK: a response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI: feedback information for a DL channel. Multiple input multiple output (MIMO)-related feedback information includes an RI and a PMI.

Table 6 illustrates exemplary PUCCH formats. PUCCH formats may be divided into short PUCCHs (Formats 0 and 2) and long PUCCHs (Formats 1, 3, and 4) based on PUCCH transmission durations.

[Table 6]

| PUCCH format | Length in OFDM $N_{\text{symb}}^{\text{PUCCH}}$ symbols | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBs, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

(2) Physical Uplink Shared Channel (PUSCH)

The PUSCH carries UL data (e.g., UL-shared channel transport block (UL-SCH TB)) and/or UL control information (UCI), and is transmitted based a Cyclic Prefix-Orthogonal Frequency Division Multiplexing (CP-OFDM) waveform or a Discrete Fourier Transform-spread-Orthogonal Frequency Division Multiplexing (DFT-s-OFDM) waveform. When the PUSCH is transmitted based on the DFT-s-OFDM waveform, the UE transmits the PUSCH by applying transform precoding. For example, when transform precoding is not allowed (e.g., transform precoding is disabled), the UE may transmit the PUSCH based on the CP-OFDM waveform. When transform precoding is allowed (e.g., transform precoding is enabled), the UE may transmit the PUSCH based on the CP-OFDM waveform or the DFT-s-OFDM waveform. PUSCH transmission may be dynamically scheduled by the UL grant in the DCI or may be semi-statically scheduled based on higher layer (e.g., RRC) signaling (and/or Layer 1 (L1) signaling (e.g., PDCCH)) (configured grant). PUSCH transmission may be performed on a codebook basis or a non-codebook basis.

On DL, the BS may dynamically allocate resources for DL transmission to the UE by PDCCH(s) (including DCI format 1_0 or DCI format 1_1). Further, the BS may indicate to a specific UE that some of resources pre-scheduled for the UE have been pre-empted for signal transmission to another UE, by PDCCH(s) (including DCI format 2_1). Further, the BS may configure a DL assignment periodicity by higher-layer signaling and signal activation/deactivation of a configured DL assignment by a PDCCH in a semi-persistent scheduling (SPS) scheme, to provide a DL assignment for an initial HARQ transmission to the UE. When a retransmission for the initial HARQ transmission is required, the BS explicitly schedules retransmission resources through a PDCCH. When a DCI-based DL assignment collides with an SPS-based DL assignment, the UE may give priority to the DCI-based DL assignment.

Similarly to DL, for UL, the BS may dynamically allocate resources for UL transmission to the UE by PDCCH(s) (including DCI format 0_0 or DCI format 0_1). Further, the BS may allocate UL resources for initial HARQ transmission to the UE based on a configured grant (CG) method (similarly to SPS). Although dynamic scheduling involves a PDCCH for a PUSCH transmission, a configured grant does not involve a PDCCH for a PUSCH transmission. However, UL resources for retransmission are explicitly allocated by PDCCH(s). As such, an operation of preconfiguring UL resources without a dynamic grant (DG) (e.g., a UL grant through scheduling DCI) by the BS is referred to as a "CG". Two types are defined for the CG.

- Type 1: a UL grant with a predetermined periodicity is provided by higher-layer signaling (without L1 signaling).
- Type 2: the periodicity of a UL grant is configured by higher-layer signaling, and activation/deactivation of the CG is signaled by a PDCCH, to provide the UL grant

**Dynamic slot format indication information (e.g., DCI format 2_0)**

Basically, a slot format indicates per-symbol usages in a given slot, indicating one of downlink (D), uplink (U), or flexible (F) for each symbol. Slot format-related information may be transmitted in one or more of the following signals:

- Static or semi-static slot format indication (SFI) by higher-layer signaling (e.g., *TDD-UL-DL-ConfigurationCommon* and/or *TDD-UL-DL-ConfigDedicated*);
- Measurement-related scheduling signal (e.g., measurement-related signal configured by UE-specific RRC signaling);
- Dynamic SFI (e.g., signal transmitted in DCI format 2_0); and
- UE-specific data transmission scheduling signal (e.g., UE-specific DCI).

The static or semi-static SFI may be indicated by cell-specific RRC signaling (e.g., *TDD-UL-DL-Configuration-Common*) or UE-specific RRC signaling (e.g., *TDD-UL-DL-ConfigDedicated*). The measurement-related signal may be indicated by UE-specific RRC signaling, and indicate a periodic/semi-persistent CSI-RS for CSI reporting, periodic CSI reporting, a periodic/semi-persistent SRS, or the like. The UE-specific data transmission-related signal may include UE-specific DCI that triggers a PDSCH, a PUSCH, or a PUCCH with A/N for a PDSCH, and DCI that triggers an aperiodic measurement-related signal such as an aperiodic CSI-RS, an aperiodic SRS, or the like.

The slot format includes a format for zero, one, or two switching points. FIG. E1 illustrates various slot formats. Specifically, FIG. 14(a) illustrates a slot format for zero switching points, FIG. 14(b) illustrates a slot format for one switching point, and FIG. 14(c) illustrates a slot format for two switching points.

The slot format for zero switching points includes 14 DL symbols, 14 flexible symbols, or 14 UL symbols. The slot format for one switching point is configured to start with zero or more DL symbols and end with zero or more UL symbols, with one or more flexible symbols and DL/UL symbols in between. The slot format for two switching points includes first seven symbols starting with zero or more DL symbols and including one or more UL symbols ending in a $7^{th}$ symbol, and second seven symbols starting with one or more DL symbols and ending with zero or more UL symbols. The first seven symbols and the second seven symbols may each include zero or more flexible symbols.

Up to 256 slot formats may be defined, and their configurations are defined by a standard document such as TS 38.211. The UE is configured with a UE-specific SFI table based on the up to 256 slot formats by higher-layer signaling and receives a specific index value in the UE-specific SFI table through DCI format 2_0 (or a group-common PDCCH).

The UE determines a slot format based on the following prioritization of signals carrying the above-described slot format-related information. More specifically, when the UE receives slot format-related information through a plurality of signals, the UE considers indication information in signals prioritized as follows, only for the purpose of determining the usage of a symbol indicated as a flexible symbol by a high-priority signal.

"Slot format information by cell-specific higher-layer signaling (e.g., *TDD-UL-DL-ConfigurationCommon*) > slot format information by UE-specific higher-layer signaling (e.g., *TDD-UL-DL-ConfigDedicated*) > slot format information through a group common PDCCH (e.g., DCI format 2_0) > UE-specific data transmission scheduling information > measurement-related scheduling information."

Therefore, when a specific symbol in a slot is indicated as DL/UL to the UE by cell-specific RRC signaling or UE-specific RRC signaling, the UE does not expect DCI format 2_0 (or a group-specific PDCCH including DCI format 2_0) to indicate the specific symbol as UL/DL or flexible. When the DCI format 2_0 (or the group-specific PDCCH including DCI format 2_0) indicates the specific symbol in the slot as a flexible symbol, the UE transmits or receives a related signal in the specific symbol only when receiving separate scheduling information (e.g., UE-specific scheduling DCI), and otherwise, does not perform the signal transmission/reception in the specific symbol.

Further, the DCI format 2_0 (or the group specific PDCCH including DCI format 2_0) may further include information about available RB set(s), a channel occupancy time (COT) duration, and switching of a search space set group. Specifically, the DCI format 2_0 may include one or more of the following pieces of information. The CRC of the DCI format 2_0 may be scrambled with a UE group-common ID (e.g., SFI-RNTI). The size of the DCI format 2_0 may be configurable to be up to 128 bits by a higher layer (e.g., the RRC layer).

- Slot format indicator 1, Slot format indicator 2, 쩐, Slot format indicator N.
- If the higher layer parameter availableRB-SetPerCell is configured,

- Available RB set Indicator 1, Available RB set Indicator 2, 쩐, Available RB set Indicator N1,
- If the higher layer parameter CO-DurationPerCell is configured

- COT duration indicator 1, COT duration indicator 2, 쩐, COT duration indicator N2.
- If the higher layer parameter searchSpaceSwitchTrigger is configured

- Monitoring group flag 1, Monitoring group flag 2, 쩐, Monitoring group flag M.

An RB set corresponds to frequency resources in which a channel access process (CAP) is performed individually in a shared spectrum, and includes a plurality of contiguous (P)RBs. An available RB set indicator indicates the index of an RB set in which DL reception is available within a cell. A COT duration indicator indicates a COT shared between the BS and the UE in the shared spectrum. A monitoring group flag indicates a search space group to be monitored by the UE among a plurality of search space groups (e.g., group #0/#1) configured for the same cell. DCI format 2_0 is group-common control information, and the position (e.g., start point) of information for each UE may be indicated by higher-layer (e.g., RRC) signaling. For example, availableRB-SetPerCell is a UE-specific signal, and may include information about the position (e.g., start point) of an available RB set indicator for the UE in the DCI format 2_0. Similarly, CO-DurationPerCell and searchSpaceSwitchTrigger are also UE-specific signals and may each include information about the position (e.g., start point) of information for the UE in the DCI format 2_0.

Energy saving of BSs is considered important in wireless communication systems including 3GPP, because it may contribute to building eco-friendly networks by reducing carbon emissions and reducing the operational expenditure (OPEX) of communication industry players. In particular, as the introduction of 5G communication requires high transmission rates, BSs should be equipped with more antennas and provide services in wider bandwidths and frequency bands. As a result, the energy cost of BSs has reached 20% of the total OPEX according to a recent study. Due to this increased interest in BS energy saving, a new study item called "study on network energy savings" was approved in 3GPP NR release 18.

Specifically, the following enhancement techniques are under consideration in order to improve the energy saving capability of BSs from the perspective of transmission and reception.

- How to more efficiently apply one or more NES techniques in the time, frequency, spatial, and power domains based on UE assistance information and potential support/feedback from UEs, for a dynamic and/or semi-static operation and a finer granularity adaptation operation in transmission and reception -

The disclosure proposes a time-domain BS energy saving method.

In the disclosure, a scenario is mainly considered in which a BS dynamically configures/indicates a specific ON duration during which a DL or UL signal/channel is allowed to be transmitted and an OFF duration during which a DL or UL signal/channel is not allowed to be transmitted, thereby increasing a network energy saving (NES) gain. For example, the BS may preconfigure a plurality of OFF durations to turn off transmission of a specific DL signal during a specific duration (e.g., one or more slot/symbol/subframe durations), and dynamically indicates one of the plurality of OFF durations to notify a UE that the DL signal will not be transmitted during a time period corresponding to the preconfigured OFF duration. Accordingly, the power consumption of the BS and the UE may be reduced, and an interference mitigation effect may be expected as well.

In the disclosure, for example, when it is said that the BS operates in an NES mode for energy saving (ES), this may mean that the BS configures a plurality of OFF durations to turn off transmission of a specific DL signal during a specific duration, and dynamically indicates one of the plurality of OFF durations, so that the DL signal is not transmitted during a time period corresponding to the preconfigured OFF duration, thereby saving power of the BS and the UE. For example, an OFF duration may refer to a discontinuous transmission (DTX) period of the BS.

Alternatively, for example, when it is said that the BS operates in the NES mode, this may mean that an operation such as bandwidth part (BWP) switching or dynamic resource block (RB) adaptation is performed in the frequency domain as well as in the time domain. Further, the NES mode of the BS may refer to an operation mode in which, for example, when a specific transmission (Tx)/reception (Rx) antenna port of the BS is turned off semi-statically or dynamically in the spatial domain, the BS does not transmit and/or receive through the antenna port, thereby reducing the power consumption of the BS and the UE.

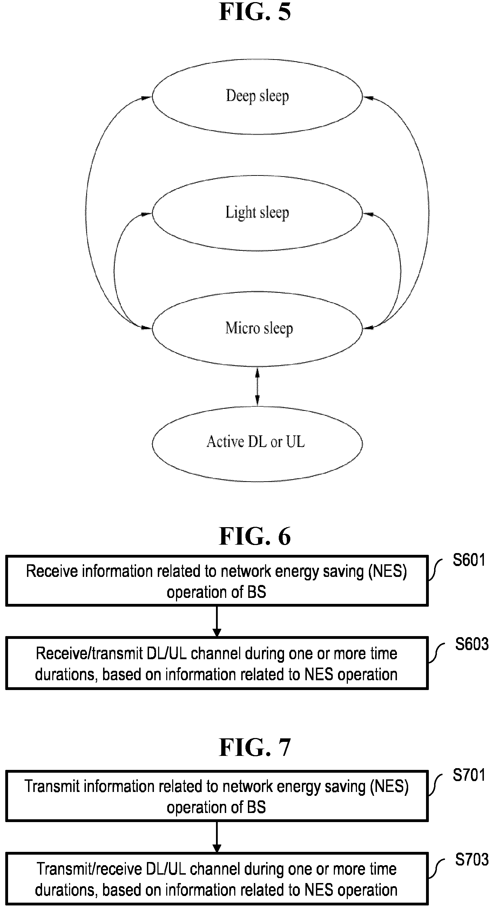

FIGS. 6 to 8 are diagrams illustrating an overall operation process of a UE and a BS according to an embodiment of the disclosure.

FIG. 6 is a diagram illustrating an overall operation process of a UE according to the disclosure.

Referring to FIG. 6, the UE may receive information related to an NES operation of a BS (S601). For example, the information related to the NES operation may be information related to ON/OFF of one or more time durations or information related to whether the BS operates in an NES mode. Alternatively, it may be information related to a periodicity of a DL/UL signal/channel according to the NES mode. For example, the UE may receive the information related to the NES operation based on at least one of [Method #1] to [Method #7].

The UE may receive/transmit a DL/UL channel during one or more time durations based on the information related to the NES operation (S603). For example, the UE may receive/transmit the DL/UL channel based on at least one of [Method #1] to [Method #7].

FIG. 7 is a diagram illustrating an overall operation process of a BS according to the disclosure.

Referring to FIG. 7, the BS may transmit information related to an NES operation of the BS (S701). For example, the information related to the NES operation may be information related to ON/OFF of one or more time durations, or information related to whether the BS operates in an NES mode. Alternatively, it may be information related to a periodicity of a DL/UL signal/channel according to the NES mode. For example, the BS may transmit the information related to the NES operation based on at least one of [Method #1] to [Method #7].

The BS may transmit/receive a DL/UL channel during one or more time durations based on the information related to the NES operation (S603). For example, the BS may transmit/receive the DL/UL channel based on at least one of [Method #1] to [Method #7].

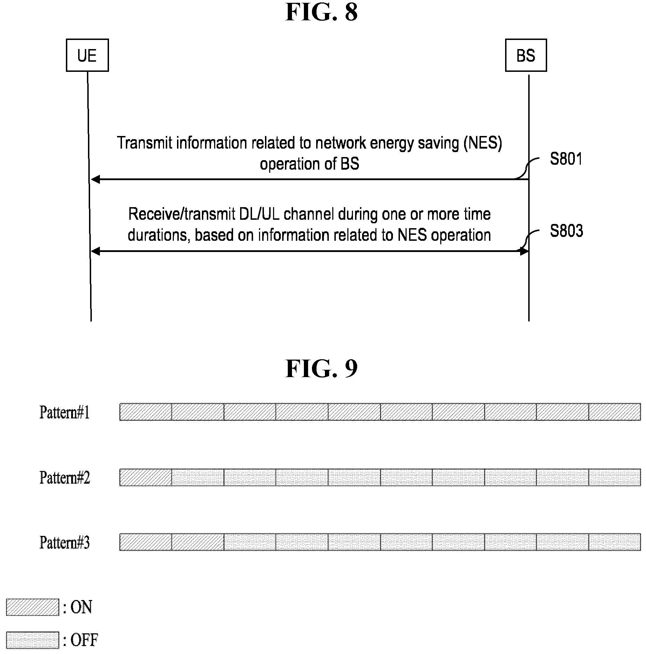

FIG. 8 is a diagram illustrating an overall operation process of a network according to the disclosure.

Referring to FIG. 8, a BS may transmit information related to an NES operation of the BS to a UE (S801). For example, the information related to the NES operation may be information related to ON/OFF of one or more time durations, or information related to whether the BS operates in an NES mode. Alternatively, it may be information related to a periodicity of a DL/UL signal/channel according to the NES mode. For example, the BS may transmit the information related to the NES operation to the UE based on at least one of [Method #1] to [Method #7].

The BS may transmit/receive a DL/UL channel during one or more time durations to/from the UE based on the information related to the NES operation (S803). For example, the BS may transmit/receive the DL/UL channel to/from the UE based on at least one of [Method #1] to [Method #7].

In [Method #1] to [Method #7] to be described below, a specific time duration may refer to one or more slots/symbols/subframes.

**[Method #1] Method of indicating OFF of a DL/UL signal/channel during a** specific time duration by (group-common) downlink control information (DCI) or a medium access control-control element (MAC-CE) by a BS

1. Method #1-1

The BS may preconfigure a plurality of OFF durations and indicate one of the plurality of OFF durations by DCI or a MAC-CE.

- In this case, an infinite or inapplicable value may be configured as a candidate for the plurality of preconfigured OFF durations, and when the infinite/non-numerical/inapplicable value is indicated by (GC-)DCI or a MAC CE, an OFF state may be maintained until ON is indicated separately.

2. Method #1-2

A timer value may be preconfigured, and when OFF is indicated, DL/UL signal/channel transmission/reception may be OFF during a corresponding timer duration. Further, when a corresponding timer expires, the DL/UL signal/-channel transmission/reception may be ON again.

3. Method #1-3

In addition to the states downlink(D)/uplink (U)/flexible (F) which may be indicated by an existing slot format indicator (SFI), an additional state (e.g., N) may be added. A symbol duration for which the state (e.g., N) is indicated by the SFI may be subject to an operation for an OFF duration, proposed by the proposed methods (e.g., an operation based on any one of Method #1 to Method #7).

### 4. Method #1-4

A specific DL/UL signal/channel may be allowed to be transmitted/received exceptionally even during a duration in which transmission/reception of a DL/UL signal/channel is OFF according to a proposed indication method of the disclosure. For example, the specific DL/UL signal/channel may be synchronization signal block (SSB) and/or channel state information-reference signal (CSI-RS) for tracking and/or physical random access channel (PRACH).

### 5. Method #1-5

When PDCCH monitoring continues even during a duration in which DL/UL signal/channel transmission and reception is OFF according to a proposed indication method of the disclosure (e.g., an indication method based on any one of Method #1 to Method #7), a search space set group (SSSG) linked to an ON duration and an SSSG linked to an OFF duration may be configured separately, or the periodicity of SS sets during the OFF duration may be configured to be greater than the periodicity of SS sets during the ON duration.

However, the preconfigured OFF duration and/or timer candidate values may be common to all DL/UL signals/channels. Alternatively, OFF duration and/or timer candidate values may be configured separately for each DL/UL signal/channel.

Further, when an OFF duration and/or timer value for a specific DL/UL signal/channel is indicated, the DL/UL signal/channel to be turned off may be preconfigured or predefined or directly indicated by the BS.

Further, when association between DL/UL signals/channels is preconfigured, and OFF of a specific signal/-channel is indicated, the associated signal/channel may also be turned off. The signal/channel to be turned OFF may also include a PDCCH, and when the PDCCH is turned off, the UE may not perform PDCCH monitoring during an OFF duration and/or timer duration. When the PDCCH is not included in the OFF signal/channel, the UE may perform PDCCH monitoring during the OFF duration and/or timer duration, and receive an indication to lengthen the OFF duration or an indication to switch to an ON duration through the PDCCH.

When an OFF duration and/or timer-based OFF is indicated by (group-common) DCI or a MAC-CE, the starting time and length of applying the OFF duration and/or timer may be configured by a separate parameter when OFF durations and/or timer candidate values are configured, or may be configured by joint encoding with each of OFF duration and/or timer candidate values. Alternatively, the starting time and length of applying the OFF duration and/or timer may be determined as a pre-agreed value (e.g., a specific value defined in the standard), or may be configured differently for each UE in consideration of a processing time of the UE. Alternatively, the starting time and length of applying the OFF duration and/or timer may be dynamically indicated together with an OFF indication by (group-common) DCI or a MAC-CE.

Further, when an OFF duration and/or timer is indicated by (group-common) DCI or a MAC-CE, inactivity-related timers (e.g., BWPinactiveTimer, SCellinactiveTimer, dataInactivityTimer, and discontinuous reception (DRX)-related timer) configured for the UE may be held during the OFF duration and resumed when the OFF duration ends, or **may be stopped during the OFF duration and restarted when the OFF duration ends.**

There have been methods of obtaining a power saving effect by semi-statically turning off transmission/reception in a specific subframe/slot. However, these methods may cause significant latency in data transmission and have difficulty in immediately changing a transmission rate, thereby resulting in serious performance degradation of the UE.

Particularly, the methods may be inefficient and difficult to use in delay-sensitive services such as ultra reliable low latency communication (URLLC). Therefore, there may be a need for a method of dynamically configuring/indicating an ON/OFF duration for a DL/UL signal/channel, in units of symbols which are finer in granularity than subframes/slots, to reduce the power consumption of a BS and a UE, while minimizing a decrease in the data transmission/reception rate of the UE.

To this end, a plurality of ON/OFF durations configurable in units of symbols may be preconfigured for each UL/DL signal/channel by higher layer signaling such as radio resource control (RRC) signaling, and OFF of a specific DL/UL signal during a specific time duration may be indicated by (group-common) DCI or a MAC-CE.

For example, an ON/OFF duration configuration may be configured as {ON duration, duration 1, duration 2, ... , infinite value}. For example, ON/OFF duration candidate values for a PDSCH may be configured as {ON, 2 symbols, 4 symbols, ... , infinite}, and one of the ON/OFF duration candidate values may be indicated. When the indication is configured to be applied after 4 symbols, and 14 symbols is indicated by a MAC-CE, the PDSCH may be turned off during 14 symbols after 4 symbols from a time when the UE receives the indication, so that the BS does not transmit the PDSCH and the UE does not receive the PDSCH, thereby reducing power consumption.

Further, an infinite or inapplicable value may be configured as a preconfigured OFF duration candidate value, and when the infinite/non-numerical/inapplicable value is indicated by (GC-)DCI or a MAC CE, the UE may maintain a corresponding DL/UL signal/channel in the OFF state until an ON indication is received separately from the BS.

In another method, a plurality of candidate timer values and a DL/UL signal/channel for which a corresponding timer is applied may be preconfigured. In this case, the DL/UL signal/channel for which the corresponding timer is applied may be configured commonly for the plurality of candidate timer values or may be configured separately for each of the plurality of candidate timer values.

When one of the plurality of candidate timer values is indicated by (group-common) DCI or a MAC-CE, a specific DL/UL signal/channel may be turned off (deactivated) not to be transmitted or received for the corresponding timer value, so that the BS and the UE may obtain an energy saving effect. When the corresponding timer expires, the specific DL/UL signal channel may be turned on (activated) again to be transmitted or received. For example, when a timer value of 3ms is configured for a periodic CSI-RS and the periodic CSI-RS is configured to be turned on after a specific time (e.g., 1 slot) from expiration of the timer value, the periodic CSI-RS may be tuned off (deactivated) within a time duration during which the timer is running, and turned on again to be transmitted/received after the specific time (e.g., 1 slot) from the expiration of the timer. In this case, for example, even if the turned-on periodic CSI-RS is not actually transmitted or received during the OFF duration, the periodic CSI-RS may be transmitted and received after the ON duration in consideration of an original transmission timing of the periodic CSI-RS in the OFF duration.

For example, the periodic CSI-RS may be considered as dropped or deactivated during the OFF duration. Alternatively, when the ON duration starts, the periodic CSI-RS may be transmitted and received as if it were a new periodic CSI-RS, on the assumption that the transmission and reception of the periodic CSI-RS is released during the OFF duration.

In the above example, the timer may also be started after the specific time (e.g., 1 slot) from the time when the DCI or MAC-CE is received, thereby entering the OFF duration.

The preconfigured OFF duration and/or timer candidate values described above may be common to all DL/UL signals and channels or may be configured for each DL/UL signal and channel. In other words, specific OFF duration and/or timer candidate values may be configured for a single DL/UL signal/channel, or a plurality of DL or UL signals/channels may be used in conjunction with the same OFF duration and/or timer candidate values.

A specific DL/UL signal/channel to be turned off by indicating an OFF duration and/or timer value may be preconfigured/pre-agreed or defined in the standard, or may be directly indicated by (group-common) DCI or a MAC-CE. Further, association between DL/UL signals/channels may be preconfigured, and when OFF of a specific signal/channel is indicated, the associated signal/channel may also be turned off. For example, in the case where association between a periodic CSI-RS (P-CSI-RS) and a periodic SRS (P-SRS) are preconfigured, when an OFF duration and/or timer value is indicated for the P-CSI-RS by (group-common) DCI or a MAC-CE, not only the P-CSI-RS but also the linked P-SRS may be turned off during a time period corresponding to the OFF duration and/or timer value.

The signal/channel to be turned off may also include a PDCCH, and when the PDCCH is turned off, the UE may not perform PDCCH monitoring during an OFF duration and/or timer duration. When the PDCCH is not included in the OFF signal/channel, the UE may perform PDCCH monitoring during the OFF duration and/or timer duration, and receive an indication to lengthen the OFF duration or an indication to switch to an ON duration through the PDCCH. When the indication is received in (group-common) DCI or a MAC-CE, the starting time and length of applying the OFF duration and/or timer may be configured by a separate parameter when OFF duration and/or timer candidate values are configured, or may be configured by joint encoding with each of OFF duration and/or timer candidate values. Alternatively, the starting time and length of applying the OFF duration and/or timer may be determined as a pre-agreed value (e.g., a specific value defined in the standard), or may be configured differently for each UE in consideration of a processing time of the UE. Alternatively, the starting time and length of applying the OFF duration and/or timer may be dynamically indicated together with an OFF indication by (group-common) DCI or a MAC-CE.

In NR, symbols in a slot may be semi-statically configured as U/D/F by cell-specific signaling or UE-specific signaling.

Further, a symbol configured as F for a UE configured with DCI format 2_0 monitoring may be dynamically indicated as one of D/U/F by DCI format 2_0. A UE not configured with SFI monitoring may perform RRC-configured DL/UL reception/transmission in a symbol configured as F.

Further, in the case of a UE configured to monitor an SFI, 1) when the UE fails to receive the SFI, it may perform only PDCCH monitoring in a symbol configured as F, and 2) when the UE receives the SFI, and the symbol configured as F is indicated as F again by the SFI, the UE does not perform RRC-configured DL/UL reception/transmission including PDCCH monitoring.

Based on the above description, in addition to the states D/U/F that may be indicated by the existing SFI, one state (e.g., N) may be added. A symbol duration for which the state (e.g., N) is indicated by the SFI may be subject to an operation for an OFF duration proposed by a proposed method (e.g., an operation based on any one of Method #1 to Method #7).

A specific DL/UL signal/channel may be allowed to be transmitted/received exceptionally even during a time duration in which transmission/reception of a DL/UL signal/channel is OFF according to a proposed indication method of the disclosure. For example, because signals/channels such as SSB and/or CSI-RS for tracking and/or PRACH are essential, they may be preferably allowed to be transmitted/received even during an OFF duration.

Further, when PDCCH monitoring continues even during a time duration in which DL/UL signal/channel transmission and reception is OFF according to a proposed indication method of the disclosure (e.g., an indication method based on any one of Method #1 to Method #7), an SSSG linked to an ON duration and an SSSG linked to an OFF duration may be configured separately.

For example, SS set configuration#1 with a relatively small PDCCH monitoring periodicity may be used during an ON duration and switched to SS set configuration#2 with a relatively large PDCCH monitoring periodicity during an OFF duration.

In another example, SSSG index#0 may be used during an ON duration and switched to SSSG index#1 during an OFF duration. In this case, SSSG index#0 may have a relatively small PDCCH monitoring periodicity, and SSSG index#1 may have a relatively large PDCCH monitoring periodicity. Alternatively, the periodicity of SS sets during the OFF duration may be configured greater than the periodicity of SS sets during the ON duration.

According to [Method #1], OFF is dynamically indicated for at least one of a plurality of time durations, a scheduling delay (latency) may be reduced compared to configuring ON/OFF of a DL/UL signal/channel according to a semi-static ON/OFF pattern, and ON/OFF of a DL/UL signal/channel is rapidly indicated according to a cell condition. Accordingly, the DL/UL signals/channel is not transmitted/received during an OFF duration, thereby minimizing DL/UL performance degradation and efficiently reducing the power consumption of a UE and a BS.

**[Method #2] Method of dynamically adjusting the periodicity of a DL/UL signal/channel**

**1. Method #2-1**

**Method of preconfiguring a plurality of periodicity candidates for (periodic)** CSI-RSs/SRSs, and indicating one of the plurality of periodicity candidates by (group-common) DCI or a MAC CE

2. Method #2-2

Method of pre-grouping (periodic) CSI-RSs/SRSs into a plurality of groups according to their periodicities, and indicating a specific one of the plurality of groups by (group-common) DCI or a MAC CE to adjust a periodicity

The above method is applicable to all DL/UL signals/channels (e.g., semi-persistent PDSCH and CG-PUSCH) which are preconfigured and transmitted, as well as the (periodic) CSI-RS, and a plurality of periodicity candidate values may be common to all DL/UL signals/channels or configured for each DL/UL signal/channel. Further, when the periodicity of a specific DL/UL signal/channel is indicated to be changed, the DL/UL signal/channel with the periodicity to be changed may be preconfigured or predefined or may be directly indicated.

Further, when association is configured between DL/UL signals and channels, and the periodicity of a specific signal/channel is indicated to be changed, the periodicity of the associated signal/channel may also be changed. An infinite or inapplicable value may be configured as a preconfigured periodicity candidate value, and when the infinite/non-numerical/inapplicable value is indicated by (GC-)DCI or a MAC CE, the existing periodicity may be maintained until a separate indication is given.

Further, when a periodicity is indicated by (group-common) DCI or a MAC-CE, inactivity-related timers configured for the UE (e.g., BWPinactiveTimer, SCellinactiveTimer, dataInactivityTimer, and DRX-related timer) may be held during a **duration in which a CSI-RS/SRS is not transmitted according to the changed periodicity and resumed when the duration ends, or may be stopped during the duration and restarted when the duration ends.**

For example, the (periodic) CSI-RS/SRS may be preconfigured with periodically transmittable and receivable resources by higher layer signaling such as RRC signaling, and even if the BS does not transmit DCI (a DL assignment or a UL grant) separately, the UE may receive the CSI-RS and transmit the SRS in the preconfigured resources. However, since periodicities and resources are semi-statically assigned to these periodic DL/UL signals/channels, it is difficult to dynamically change the periodicities, and an RRC reconfiguration is required to change the periodicities. Therefore, since it takes a relatively long time to change the periodicities, it is not easy to dynamically turn off and on a signal with a specific periodicity according to a traffic situation of the BS, which may not be efficient in power saving.

For example, when the BS has little data to transmit to the UE during a specific duration, the BS may switch to the sleep mode, thus saving power. However, when P-CSI-RS or P-SRS resources are configured in the middle of the duration, the BS should transmit or receive the P-CSI-RS or the P-SRS, and thus consume a transition time and power for transition. Therefore, the BS may not be able to enter the sleep mode at all or may only be able to sleep for a very short time, leading to an insignificant power saving effect. However, since such a low traffic situation occurs dynamically, it is difficult to predict the traffic situation, and it may not be desirable to perform an RRC reconfiguration every time a low traffic situation or traffic change occurs.

Accordingly, when the BS configures periodic DL/UL signals and channels such as the (periodic) CSI-RS/SRS, it may configure a plurality of periodicity candidate values. When a periodicity needs to be changed for power saving of the BS, the periodicity may be dynamically changed by indicating one of the plurality of preconfigured periodicity candidates by (group-common) DCI or a MAC-CE.

For example, when the BS configures the (periodic) CSI-RS/SRS, the BS may configure a plurality of periodicity candidate values such as {very short periodicity (in unit of a symbol), short periodicity (in units of several symbols), normal periodicity (in units of a slot), long periodicity (in units of several slots), very long periodicity (in units of tens of slots)}, and change the periodicity of the (periodic) CSI-RS/SRS by dynamically indicating one of the periodicity candidate values by (group-common) DCI or a MAC-CE as needed. When the traffic situation of the BS changes from high to low, it may be indicated that the periodicity of a DL/UL signal/channel configured with the short periodicity is to be changed to the long periodicity or the very long periodicity in order to save power by maintaining the sleep mode as long as possible.

Alternatively, (periodic) CSI-RS/SRSs may be pre-grouped into a plurality of groups according to their periodicities, and the BS may adjust a periodicity by indicating a specific one of the plurality of groups by (group-common) DCI or a MAC CE. For example, similar to SSSG switching in which the monitoring periodicity of an SS set of the UE is changed depending on within or outside a channel occupancy time (COT) in Release 16 NR-U, CSI-RSs/SRSs with a short periodicity may be configured as group index #0, and CSI-RSs/SRSs with a long periodicity may be configured as group index #1. The BS may dynamically change the periodicity of a (periodic) CSI-RS/SRS by indicating one of group indexes #0 and #1 as needed.

An SSB-based RRM measurement timing configuration (SMTC) is a period configured with measurement resources for radio resource management (RRM), similar to a discovery measurement timing configuration (DMTC) in the Long Term Evolution (LTE) system.

The DMTC is a time window in which a discovery reference signal (DRS) for synchronization and channel estimation of a UE may be transmitted, as it is difficult to periodically transmit a signal such as a primary synchronization signal (PSS)/secondary synchronization signal (SSS)/common reference signal (CRS) in view of the nature of a cell operating as a secondary cell (SCell) in LTE-LAA.

The DRS is a signal defined for small cell enhancement in Release-12. The DRS is a control signal including a PSS/SSS/CRS and is transmitted periodically every 40ms.

The SMTC is also a time window in which measurement resources for RRM may be configured in NR. Since there is no reference signal that is always transmitted like the CRS of LTE in NR, RRM may be performed in the SSS and PBCH-demodulation reference signal (DMRS) of an SS/PBCH block, and a CSI-RS configured in an active BWP. An SMTC-related configuration may include an SMTC window duration, periodicity, and timing offset, and a plurality of periodicities may be set for SMTC1 and SMTC2. For example, a plurality of SMTCs may be configured, and a periodicity may be set for each of the plurality of SMTCs. In this case, SMTC1 and SMTC2 may have different periodicities but the same timing offset and SMTC window duration.

As an example for which the above Method #2-1 or Method #2-2 is applied, SSB and/or SIB (e.g., PDSCH and PDCCH scheduling SIB) and/or paging (e.g., DCI and paging message) and/or SMTC may be considered.

That is, a plurality of periodicity candidate values may be preconfigured for the SSB/broadcast data/SMTC, and the BS may change the periodicity of the SSB/broadcast data/SMTC by indicating one of the plurality of periodicity candidate values by (GC-)DCI or a MAC CE. The SSB/SIB is an essential signal for initial access or radio resource measurement (RRM) of a UE, thus requiring periodic transmission. However, from the perspective of power saving of the BS, the SSB/SIB may be required to be transmitted periodically even in a situation where there is little data to transmit. In this case, it may be necessary to configure a plurality of periodicity candidate values and allow the BS to change the periodicity more dynamically by (group-common) DCI or a MAC-CE in order to reduce the power consumption of the BS.

The above dynamic periodicity change method may be applicable not only to the (periodic) CSI-RS or SRS but also to all DL/UL signals/channels that are preconfigured and transmitted. Further, a plurality of periodicity candidate values may be common to all DL/UL signals/channels, or may be configured for each DL/UL signal/channel. Further, when the periodicity of a specific DL/UL signal/channel is indicated to be changed, the DL/UL signal/channel with the periodicity to be changed may be preconfigured or predefined, or may be directly indicated.

Further, association may be configured between DL/UL signals and channels, and when the periodicity of a specific signal/channel is indicated to be changed, the periodicity of the associated signal/channel may also be changed. An infinite or inapplicable value may be configured as a preconfigured periodicity candidate value, and when the infinite/non-numerical/inapplicable value is indicated by (GC-)DCI or a MAC CE, the existing periodicity may be maintained until an indication is given separately.

Further, as another example of a DL/UL signal/channel for which Method #2 is applicable, a plurality of periodicity candidate values may be preconfigured for a semi-persistent (SPS)-PDSCH or a configured grant (CG)-PUSCH, and the BS may indicate one of the a plurality of periodicity candidate values by (group-common) DCI or a MAC CE. In another example, SPS-PDSCHs or CG-PUSCHs may be pre-grouped into a plurality of groups according to their periodicities, and the BS may adjust a periodicity by indicating a specific one of the plurality of groups by (group-common) DCI or a MAC CE.

According to [Method #2], when the BS operates in the NES mode for energy saving, the periodicity of a periodic DL/UL signal/channel may be dynamically changed to a relatively large periodicity, thereby maximizing a duration (e.g., the duration of the sleep mode of the BS) in which transmission and reception of the DL/UL signal/channel is not allowed, and preventing unnecessary measurements and reporting of the UE. Accordingly, the overall power consumption of the UE and the BS may be reduced.

**[Method #3] Method of preconfiguring a plurality of ON/OFF patterns and indicating a specific ON/OFF pattern by (group common) DCI or a MAC-CE**

**1. Method #3-1**

**Information related to a duration or timer during which an ON/OFF pattern lasts may be additionally configured in ON/OFF pattern configuration information, or the duration or timer during which the ON/OFF pattern lasts may be configured/indicated** separately from the ON/OFF pattern configuration information.

2. Method #3-2

When a duration or timer during which an ON/OFF pattern lasts ends, it may be switched to an ON duration or switched to a preconfigured next ON/OFF pattern and a duration or timer corresponding to the next ON/OFF pattern.
Inactivity-related timers configured for the UE (e.g., BWPinactiveTimer, SCellinactiveTimer, dataInactivityTimer, and DRX-related timer) may be held during the OFF duration and resumed when the OFF duration ends, or may be stopped during the **OFF duration and restarted when the OFF duration ends.**
A method may be considered in which similar to the DRX cycle of the UE, the BS also preconfigures an ON/OFF duration semi-statically, transmits/receives a DL/UL signal/channel normally during the ON duration, and switches its operation mode to the sleep mode/power saving mode during the OFF duration to reduce power consumption. However, this method of performing transmission and reception in a semi-static ON/OFF duration may obtain the energy saving effect during the preconfigured OFF duration. However, when urgent traffic occurs, such as an SR or PRACH transmission of a UE, in the OFF duration, the BS is not able to respond immediately until the ON duration, and the resulting large delay in transmitting an RAR or UL grant may degrade the performance of the UE. Therefore, a plurality of ON/OFF patterns may be preconfigured, and the BS may dynamically change the lengths of the ON duration and the OFF duration by indicating a specific one of the plurality of ON/OFF patterns by (group-common) DCI or a MAC-CE.
For example, as illustrated in FIG. 9, the BS may preconfigure {Pattern 1: Always ON, Pattern 2: 1 slot ON + 9 slots OFF, Pattern 3: 2 slots ON + 8 slots off, ...} for the UE, and dynamically indicate to the UE which one of the three patterns to be used to turn a DL/UL signal/channel on/off by (group-common) DCI or a MAC-CE. Further, the DL/UL signal/channel for which the ON/OFF pattern and the duration of the ON/OFF pattern are to be applied may be preconfigured or defined (in the standard). Alternatively, the BS may directly indicate the DL/UL signal/channel for which the ON/OFF pattern and the duration of the ON/OFF pattern are to be applied.
Further, when association is preconfigured between DL/UL signals/channels and an ON/OFF pattern and the duration of the ON/OFF pattern is indicated to be applied for a specific signal/channel, the same ON/OFF pattern and duration of the ON/OFF pattern or a predefined specific ON/OFF pattern and the duration of the ON/OFF pattern may also be applied for the associated signal/channel.
For example, similarly to [Method #1], when association is configured between the periodic CSI-RS and the periodic SRS, and an ON/OFF pattern and the duration of the ON/OFF pattern are indicated for the P-CSI-RS by (group-common) DCI or a MAC-CE, the P-SRS may also be transmitted and received according to the ON/OFF pattern and duration, or according to a specific ON/OFF pattern predefined for the P-SRS and the duration of the ON/OFF pattern.
According to [Method #3], since the BS configures ON/OFF for a plurality of time durations by one signaling in the form of a pattern, the power consumption of the UE and the BS may be reduced while reducing the signaling overhead of indicating ON/OFF for the plurality of durations. Further, an ON/OFF pattern is dynamically changed according to an operating state of a cell, while reducing signaling overhead, thereby minimizing the scheduling delay of the UE and DL/UL performance degradation and thus enabling efficient energy saving.
**[Method #4] Operation of an advanced UE when a BS operates in a power saving mode. For example, the power saving mode may mean that a DL/UL signal/channel is transmitted and received based on an OFF duration/timer/pattern according to Method #1, Method #2, and/or Method #3 of the disclosure.**

**1. Method #4-1**

**A penalty for PRACH transmission failure may not be applied. For example, the penalty may mean applying power ramping, a preamble counter, and/or a preamble backoff. Further, PRACH transmission failure may mean that the UE does not receive an** RAR from the BS.

2. Method #4-2

RACH occasions (ROs) allocated to a duration in which an RAR window and an OFF duration overlap may be processed as invalid.

3. Method #4-3

A penalty for SR transmission failure (not receiving a response to an SR transmission) may not be applied. For example, the penalty may mean applying an SR counter and/or an SR prohibit timer. Further, SR transmission failure may mean that the UE does not receive a response (e.g., UL grant) to an SR transmission of the UE from the BS.

4. Method #4-4

An SSB periodicity and an RO in the power saving mode are linked so that SSB-to-RO mapping may be implicitly changed according to a change of the SSB periodicity.

5. Method #4-5

SRS/CSI report/CG-PUSCH resources that overlap or are correlated with an OFF duration may be turned off.

6. Method #4-6

A more relaxed RAN4 requirement may be applied in a normal mode.

**7. Method #4-7**

**Some of preconfigured paging occasions (POs) may be treated as invalid for NES to save power.**
When the BS operates according to an OFF duration/timer/pattern applied for the BS and the UE as in Method #1, Method #2 and/or Method #3 of the disclosure for power saving, transmission/reception of a specific DL/UL signal/channel or all DL/UL signals/channels is turned off (deactivated) during a corresponding time duration. Therefore, a different criterion may be required from a subsequent operation which is defined for the UE in transmitting/receiving a specific signal/channel during an ON duration.
For example, when the UE transmits a PRACH but fails to receive an RAR within an RAR window while the BS is operating in the normal mode, the standard defines that the UE performs a subsequent operation such as ramping the transmission power of the PRACH, retransmitting it, increasing the counter value, backing off when a specific power value (e.g., maximum power) or maximum counter value is reached, selecting another PRACH preamble, and attempting retransmission.
However, when the BS operates in the power saving mode, it may be configured that PRACH reception itself is not allowed during an OFF duration. Therefore, when the UE transmits the PRACH during the duration, the channel itself may be turned off and the BS may make no reception attempt, rather than the BS fails to properly receive the PRACH transmitted by the UE and fails to transmit the RAR. In this case, a different criterion from the previously defined subsequent UE operation may be required.
For example, a subsequent UE operation such as the above Method #4 may be defined for an advanced UE capable of receiving and applying a configuration/indication related to the power saving mode of a BS as in Method #1, Method #2, and Method #3 of the disclosure. In this case, since a legacy UE may not have the capability to apply the configuration/indication related to the power saving mode of the BS, it may inevitably follow the existing procedure defined in the standard for power saving of the BS, which may result in a penalty.
When the BS operates in the power saving mode by applying a method such as an OFF duration/timer/pattern, and the advanced UE capable of receiving and applying a configuration/indication of the BS transmits and receives a DL/UL signal/channel to and from the BS as in the above example, a penalty for PRACH transmission failure may not be applied within the OFF duration/timer/pattern. For example, the penalty may mean applying power ramping, a preamble counter, and/or a preamble backoff as described above. Further, PRACH transmission failure may mean that the UE does not receive an RAR or a contention resolution message.
In other words, even if the UE transmits a PRACH and fails to receive an RAR, the UE may not follow the existing subsequent procedures defined for RAR reception failure, considering that the BS intentionally does not receive it due to the OFF duration/timer/pattern preconfigured/indicated by the BS. For example, the UE may not perform power ramping for the PRACH, not apply the preamble counter and backoff, wait until an ON duration, and then transmit the PRACH again. In other words, during the ON duration, the UE may retransmit the PRACH with the same power as the PRACH transmitted during the OFF duration without increasing or decreasing the preamble counter and backoff.

Further, when the UE transmits the PRACH in a specific RO, an RAR window linked to the RO is configured, and only when the UE receives an RAR in response to the PRACH within the corresponding duration, the Msg1 transmission is considered successful. However, when the RAR window linked to the specific RO overlaps with the OFF duration/timer/pattern of the BS, the BS may not perform transmission itself during the corresponding duration, and therefore, RAR transmission may not be expected. Therefore, to prevent an unnecessary PRACH transmission in an RO allocated to a duration in which the RAR window and the OFF duration overlap, the RO may be processed as invalid.

When there is UL data to be transmitted in a buffer, the UE transmits a PUCCH using an SR resource preconfigured by the BS. When the BS successfully receives the SR PUCCH transmitted by the UE, it may allocate resources for a UL transmission of the UE by transmitting a UL grant. However, when the UE fails to receive the UL grant from the BS, a penalty for SR transmission failure defined in the standard similar to a penalty for PRACH transmission failure may be applied. For example, the penalty may mean applying an SR counter and/or an SR prohibit timer. Further, SR transmission failure may mean that the UE does not receive a response (e.g., UL grant) to an SR transmission of the UE from the BS.

However, since the UL grant transmission is also turned off within an OFF duration/timer/pattern configured by the BS for power saving, for the same reason as failure of an RAR for a PRACH, and thus the SR is not intentionally received, a penalty such as an SR counter or SR prohibit timer may not be applied for the SR transmission, when the BS operates in the power saving mode.

Further, an SSB transmission may also be included within the OFF duration/timer/pattern for the power saving mode operation. Since there is a mapping relationship between an SSB and an RO, when an SSB periodicity is changed or the number of transmitted SSBs is reduced, the SSB-to-RO mapping also needs to be changed accordingly. The SSB-to-RO mapping relationship to be changed may be indicated explicitly, or implicitly according to a pre-agreement (e.g., defined in the standard) or a preconfiguration of the BS rather than indicated every time an event occurs. For example, when the SSB periodicity is changed to a large value or the number of SSBs is changed to a small value, the SSB may be mapped to an RO every N radio frames or every multiple of N radio frames, or only in a few radio frames near the SSB (e.g., after the SSB is transmitted), rather than an RO is mapped to the SSB in each radio frame.

Similarly, for SRS/CSI reporting/CG-PUSCH resources that overlap or are correlated with an OFF duration/timer/pattern, the advanced UE may turn off the resources and reporting and not transmit them even without a separate indication/configuration from the BS. Further, when the BS operates in the power saving mode, more relaxed RAN4 requirements than in the normal mode may be applied. For example, a cell selection/reselection criterion, RRM-related requirements, and/or time and frequency tracking/offset may be more relaxed than in the normal mode.

Alternatively, power saving may be achieved by treating some of preconfigured paging occasions (POs) as invalid, for NES. Although this method may be a little detrimental to a legacy UE, the advanced UE may recognize invalid POs, and the BS may achieve the power saving effect by not performing transmission in some POs processed as invalid.

According to [Method #4], when a procedure subsequent to a PRACH procedure or an SR transmission is not performed due to the power saving mode, no penalty may be imposed, so that the PRACH transmission or SR transmission may not interfere with transmission and reception of other UEs, and an unnecessary penalty may not be imposed on the UE.

**[Method #5] Method of indicating a power saving mode operation of a BS to a UE during an initial access or in an idle (or inactive) mode**

**1. Method #5-1**

**The BS may notify the UE whether an associated serving cell (or BS) is currently operating in the power saving mode, or that the cell may operate in the power saving mode (even if it is not currently operating in the power saving mode), by using a pre-agreed SSB pattern/SIB/PBCH/paging DCI.**

> **(1) An initial access UE may determine whether to access the cell based on SSB pattern or SIB/physical broadcast channel (PBCH) information.**
> **(2) As the barring interpretation or barring indication of current SIB1 is differentiated, a legacy UE may be cell-barred and not access the cell or the BS, while an advanced UE may access the cell or the BS.**

An initial access UE or an idle/inactive UE may need to know that a BS that the UE is trying to access or camped on is operating in the power saving mode or is currently operating in the normal mode but may switch to the power saving mode. For example, in the case where the BS operates in the power saving mode by applying an OFF duration/timer/pattern as in Method #1 and/or Method #2 and/or Method #3 of the disclosure, when the BS does not transmit a response to a PRACH or an SR to the legacy UE, the legacy UE may perform the existing defined penalty procedure as in the example of Method #4 and thus unnecessarily continue retransmitting the PRACH or the SR, thereby unnecessarily consuming power. Moreover, a procedure such as BWP switching or cell reselection may be triggered unnecessarily.

Therefore, the BS needs to notify the initial access or idle/inactive mode UE that the BS is operating in the power saving mode or the cell may operate in the power saving mode through a pre-agreed SSB pattern/SIB/PBCH/paging DCI.

For example, a specific multiplexing pattern between an SSB and a Type0-PDCCH or a specific FR1/FR2 subcarrier spacing (SCS) combination may be indicated. Alternatively, whether the BS is operating in the power saving mode and the possibility of operation in the power saving mode may be configured by information in SIB1 or a PBCH or paging DCI. In particular, the interpretation of a cell barring indication or the cell barring indication itself in SIB1 may be differentiated for the legacy UE and the advanced UE, and when a configuration indicating that the BS is operating in the power saving mode or may operate in the saving mode, the legacy UE may camp on another cell without camping on the BS by performing a cell barring operation, whereas the advanced UE supporting the power saving operation of the BS may access the BS.

The types of periodic DL/UL signals/channels to which the proposed methods of the disclosure are applicable may include not only the periodic CSI-RS/SRS, but also the SPS-PDSCH/PUSCH/CSI-RS and CG-PUSCH transmitted based on a preconfiguration of resources. Further, in the disclosure, when OFF of a DL/UL signal/channel during a specific duration is indicated by (group-common) DCI or a MAC-CE or a timer, the periodicity of a periodic DL/UL signal/channel is dynamically adjusted, or when the energy of the BS and the UE is to be saved through a plurality of preconfigured ON/OFF patterns, the corresponding ON/OFF duration/pattern in the time domain may be used only in a specific carrier/cell.

Alternatively, this may be extended to a plurality of carriers/cells through an interface (e.g., X2 interface) between gNBs or an interface (e.g., S1 interface) between a gNB and a core network, so that a common time-domain ON/OFF duration/pattern may be applied for a plurality of carriers/cells. In this case, a duration in which the time-domain ON/OFF duration/pattern is commonly applied for the plurality of carriers/cells may be limited to a portion of an entire duration.

According to [Method #5], depending on whether the BS may operate in the power saving mode and whether the UE supports the power saving mode, cell reselection and cell barring may be applied differently, thereby preventing unnecessary cell switching and hence unnecessary concentration of a plurality of UEs in one cell, caused by determining a measurement state as in the normal mode even though it is a natural measurement state based on an OFF duration.

**[Method #6] Method of notifying a UE of operation mode switching (e.g., switching between a non-NES mode and an NES mode) by a BS through group-common (or cell-specific) DCI or a MAC-CE, and method of restarting at least one configured timer**

**1. Method #6-1**

**A common common search space (CSS) may be configured for monitoring an indication of switching between the non-NES mode and the NES mode.**

**2. Method #6-2**

**A new type of CSS for NES may be introduced.**

**3. Method #6-3**

**A new radio network temporary identifier (RNTI) may be introduced for monitoring an NES indication in the specific type of CSS.**

**4. Method #6-4**

**A UE configured with C-DRX may not expect CSI-RS reception and may not perform measurement and reporting, during an inactive time or while operating in a DRX configuration and/or DRX group for NES.**

5. Method #6-5

A (group-common) DCI missing problem may be handled.

6. Method #6-6

The BS may indicate time offset information indicating an absolute or relative time interval (or spacing) from a MAC CE or DCI indication time to a time when the NES mode starts to be applied, together with operation mode switching of the BS. Alternatively, the time of starting to apply the NE mode may be preconfigured or defined (in the standard).

### 7. Method #6-7

**When group-common DCI or a MAC-CE indicates that the BS has switched from the NES mode to the non-NES mode, all timers (e.g., inactivitytimer) currently running in the UE may be restarted.**

In the proposed methods of the disclosure, a plurality of OFF durations may be preconfigured, and the BS may indicate one of the OFF durations by (group-common) DCI or a MAC-CE to indicate OFF of a DL/UL signal/channel during the specific duration. Alternatively, a plurality of periodicity candidate values for a (periodic) CSI-RS/SRS may be preconfigured, and the BS may indicate one of the periodicity values by (group-common) DCI or a MAC CE. Alternatively, a plurality of ON/OFF patterns may be preconfigured, and the BS may indicate a specific one of the plurality of ON/OFF patterns by (group common) DCI or a MAC-CE.

As in the proposed methods described above, the BS may configure the UE with a common CSS for receiving group-common DCI or a MAC-CE or with a new type of CSS to indicate an OFF duration, an ON/OFF pattern, or a periodicity by (group-common) DCI or a MAC-CE. Alternatively, a specific RNTI for monitoring an NES mode switching indication in a specific type of CSS may be agreed/configured.

For example, while using one of the existing CSS types (e.g., Type0/0A/1/2/3-CSS) as a CSS for an NES mode switching indication, a plurality of common or group-based monitoring occasions (MOs) may be configured in consideration of onDurations or POs of a UE configured with C-DRX or I-DRX. Further, a new type of CSS for an NES indication may be introduced in addition to the existing CSS types.

Alternatively, a new RNTI for NES indication reception may be introduced in addition to current RNTIs for search space monitoring. With a PDCCH monitoring window for an NES mode switching indication periodically configured, the UE may monitor the NES mode switching indication during a corresponding PDCCH monitoring window duration. When no NES mode switching indication is detected during the PDCCH monitoring window duration, the UE may operate by applying a latest received NES mode indication equally or based on a preconfigured default mode (e.g., non-NES mode).

When the UE is in a connected mode after an initial access to the BS, it should continuously perform PDCCH monitoring to identify whether there is a transmission scheduled for the UE in each configured search space (SS). However, when there is no scheduling all the time, it may be wasteful to perform unnecessary PDCCH monitoring every time, quickly draining the battery of the UE. Therefore, the BS may configure connected mode discontinuous reception (C-DRX) for the UE by configuring a duration (e.g., ON duration) during which PDCCH monitoring should be performed and an OFF duration during which PDCCH monitoring should not be performed, to enable the UE to obtain the power saving effect.

The UE performs PDCCH monitoring in the ON duration to identify whether there is DL/UL data to transmit and receive. Upon receipt of a PDCCH, the UE performs DL reception or UL transmission according to an indication. In UL, when there is data to transmit in a UL buffer, the UE may wake up and transmit an SR even in the sleep mode regardless of C-DRX. In the case of an idle mode UE, it may operate in idle mode DRX (I-DRX) in which it periodically monitors paging, and when it is not a target UE, goes back to sleep.

When it is said that the UE operates in the sleep mode, this may mean "regardless of an active time determined by C-DRX" or "in a duration other than an active time determined by C-DRX." The BS may switch to and operate in the energy saving mode for power saving in an OFF duration or a duration other than an active time of the UE.

Further, when the BS configures C-DRX for the UE through RRC, it may configure two DRX groups having separate DRX parameters.

DRX parameters that are separately configured for each DRX group are drx-onDurationTimer and drx-InactivityTimer, and the DRX parameters that are common to the DRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, drx-HARQ-RTT-TimerUL, and ULHARQ-Mode (optional).

Further, when a secondary DRX group is not configured, all serving cells are included in only one DRX group (e.g., a default DRX group). On the other hand, when two DRX groups are configured, each serving cell is uniquely assigned to one of the two DRX groups. Therefore, the secondary DRX group may be configured optionally, and when the secondary DRX group is not configured and only one DRX group is configured, an NES DRX group may be added to the corresponding DRX group or a parameter for NES may be configured to apply the methods described above.

In addition to the afore-described C-DRX configuration and DRX parameters, the BS may configure a DRX configuration for NES, for ES. The DRX configuration for NES may be group-common DRX parameters unlike parameters included in an existing UE-specific DRX configuration, in order to increase the ES of the BS.

As described above, this may mean adjusting inactive times of UEs within a cell to suit the ES purpose of the BS by changing the ondurationtimer or inactivitytimer of a UE. There may be one or more DRX configurations for NES (e.g., a plurality of DRX configurations), and a DRX group for NES may be introduced in addition to the existing primary DRX group and secondary DRX group.

When a P/SP-CSI-RS is configured for a UE configured with C-DRX, the UE may perform measurement on a configured CSI-RS resource regardless of an active time. When an active time or a csi-mask is configured, the UE may perform CSI reporting only within an onDuration. However, there is an opportunity for the BS to switch to the NES mode during an inactive time of the UE to save energy. However, since the BS may not operate in the sleep mode to transmit the P/SP-CSI-RS, the BS may not transmit the CSI-RS during the inactive time of the UE, for NES in terms of energy saving of the BS. Therefore, even the UE operating in C-DRX may not perform measurement and reporting without expecting CSI-RS reception during an inactive time period or while operating in a DRX configuration/group for NES. Alternatively, when the UE receives an NES mode switching indication from the BS, the UE may not perform measurement and reporting without expecting CSI-RS reception.

Further, since it may occur that the UE does not receive or fails to receive the NES mode switching indication transmitted by group-common DCI or a MAC CE of the BS, the BS may repeatedly transmit the NES mode switching indication by group-common DCI or a MAC CE. It may be actually difficult for the BS to individually receive HARQ-ACK feedbacks for the NES mode switching indication from individual UEs. Therefore, a default UE operation may be pre-agreed/preconfigured for a case where the UE fails to detect the group-common DCI or MAC-CE or misses the group-common DCI or MAC-CE transmitted by the BS.

The default UE operation may be configured such that when the NES mode switching indication is missing, its impact on the system/UE is minimized. For example, when there is no NES plan in a situation where a CSI-RS transmission is turned off in an inactive time and the default operation of the BS is configured as CSI-RS OFF (i.e., the UE skips CSI-RS reception), the BS may indicate CSI-RS ON by DCI. In other words, even if the BS indicates CSI-RS ON by DCI and transmits a CSI-RS, when the UE misses group-common DCI or a MAC-CE transmitted by the BS, the UE may not receive the CSI-RS according to the default operation (i.e., CSI-RS OFF).

In another example, in the case where the BS turns off a CSI-RS transmission by indicating switching from the non-NES mode to the NES mode, when the BS switches to the non-NES mode in a state where the BS has configured the default operation as CSI-RS OFF (i.e., the UE does not expect CSI-RS reception), the BS may indicate CSI-RS ON. In other words, even if the BS indicates CSI-RS ON by DCI and transmits a CSI-RS, when the UE misses group-common DCI or a MAC-CE transmitted by the BS, the UE may not receive the CSI-RS according to the default operation (i.e., CSI-RS OFF).

Even though the UE receives the NES mode switching indication, a time when the NES mode switching indication is applicable may differ for each UE. Accordingly, the NES mode switching indication indicated by group-common DCI or a MAC CE may also indicate an application time, so that it may start at the same specific time. For example, considering a time taken for the BS to retransmit a MAC CE when the UE reports a NACK for the indication in the case of indicating the NES mode switching indication by a group-common MAC-CE, or a time taken for a plurality of repeated transmissions in the case of indicating the NES mode switching indication by GC-DCI, relative or absolute time offset information about how soon the NES mode switching will start/operate from a MAC CE or DCI indication time may be indicated together with the NES mode switching indication, or may be preconfigured/defined in the standard.

The relative time offset may indicate a time (e.g., the number of slots/symbols) after which the NES mode switching is to be applied from the reception of the NES mode switching indication in the GC-DCI or GC-MAC CE. For example, the absolute time offset may mean starting/applying the NES mode switching after a specific number of slots (e.g., 10 slots) from a specific SFN (e.g., SFN=0). When the BS indicates that it has switched from the NES mode to the non-NES mode by group-common DCI or MAC-CE, all timers (e.g., inactivitytimer) currently running in the UE may be restarted.

In the above methods, the DRX configuration for NES or the cell-specific DRX configuration may mean a (cell-specific) DTX/DRX pattern or active/inactive pattern in which a duration in which a BS performs only minimal transmission and reception or completely turns off transmission and reception and a duration in which the BS performs a normal operation are repeated periodically during a duration pre-agreed/preconfigured (e.g., in the standard) for the purpose of energy saving of a BS.

For example, as an example of the DRX configuration for NES, the UE may not perform PDCCH monitoring even during an active time within one DRX cycle, and may skip reception of a common signal/channel such as SSB/SIB1 or receive it only with a very large periodicity outside the active time. Further, even when a signal such as PDCCH/PDSCH/CSI-RS/PRS/PUCCH/PUSCH/SRS is configured to be repeatedly transmitted and received outside the active time, the signal/channel may not be transmitted and received in resources of the signal/channel.

Further, when cell-specific DTX/DRX is configured or applied, the NES mode/state may be defined, and it may be preconfigured that when the NES mode/state is configured/indicated, energy is saved by turning off transmission and reception of some or all DL/UL signals, reducing the amount of frequency resources to be transmitted and received, reducing the number of antenna ports used for transmission, or reducing transmission power during a specific duration in the NES mode. Further, a BWP for NES may refer to a specific BWP switched when NES mode=ON is indicated. The BWP for NES may refer to a BWP including only RBs having a very small BW which is the amount of frequency resources, among BWPs configured for the UE.

When the BS operates in the non-NES mode (i.e., when NES mode=OFF is indicated/configured to/for UEs in a cell), transmission and reception of a DL/UL signal may be expected as in a normal BS operation. Further, the DRX configuration for NES may be identical to C-DRX/I-DRX for legacy UEs.

In addition, it may mean that a time-domain ON/OFF pattern for a plurality of pre-agreed DL/UL signals/channels is dynamically indicated through L1 (e.g., group-common DCI)/L2 (e.g., MAC-CE) signaling.

According to [Method #6], NES operation mode switching may be efficiently indicated and performed without misalignment with an indication of the BS by specifying a CSS in which the NES operation mode switching may be received or defining a time of applying NES operation mode switching and a UE operation within a DRX cycle.

[Method #7] Method of notifying a neighbor cell of information about whether a serving cell operates in NES by the serving cell or notifying a UE whether a neighbor cell operates in NES by the serving cell

When the BS operates in the NES mode according to various energy saving methods proposed in the disclosure, a specific DL/UL signal (e.g., SSB) may not be transmitted or may be transmitted with a very long periodicity during a specific duration, compared to when the BS operates in the non-NES mode. When it is said that the BS operates in the NES mode, this may imply that OFF of a specific DL/UL signal/channel is indicated or the periodicity of a periodic DL/UL signal/channel is dynamically adjusted, by (group-common) DCI or a MAC-CE. Alternatively, this may imply that a plurality of ON/OFF patterns are preconfigured and a specific pattern is dynamically indicated by (group-common) DCI or a MAC-CE or operation mode switching (e.g., switching between the non-NES mode and the NES mode) is performed by (group-common) DCI or a MAC-CE.

For example, when an SSB of a specific cell is not transmitted during a specific duration, this may affect neighbor cell measurement for RRM of a neighbor cell and UEs. In this case, when existing criteria (e.g., an RSRP threshold) are still applied, a procedure such as cell (re)selection or handover (HO) may be unnecessarily triggered.

Accordingly, when a serving cell is operating in the NES mode by applying a proposed method of the disclosure, the serving cell may notify a neighbor cell located near the serving cell of information about whether NES is operated, such as information about an OFF duration of a specific DL/UL signal/channel, information related to a change in the periodicity of the specific DL/UL signal/channel, or information about an ON/OFF pattern. As the serving cell notifies the neighbor cell of the information about whether NES is operated, an unnecessary procedure may be prevented, the neighbor cell may compensate for a problem that may occur when the serving cell operates in the NES mode, or an NES gain may be increased through cooperation between the cells. The compensation for the problem that may occur due to the NES mode operation by the neighbor cell may be, for example, transmitting SSB/SIB1 information instead of the serving cell.

The serving cell may notify currently camped-on UEs whether one or more neighbor cells located near the serving cell operate in NES. As described above, when the BS (e.g., serving cell) operates in the NES mode, even a common signal/channel such as an SSB/SSB1 may be turned off and thus not transmitted. Therefore, a neighbor cell may notify UEs within the serving cell of information related to a NES mode operation of the serving cell or the neighbor cell by a signal such as system information (SI), a cell-specific or UE-specific RRC signal, or group-common DCI/MAC-CE.

The information related to the NES mode operation may include an ON/OFF pattern of a specific DL/UL signal/channel, OFF/ON of a common signal/channel such as an SSB/SIB 1, or dynamic NES mode ON/OFF of the neighbor cell. During an SSB OFF duration of the neighbor cell based on the information, the UE may not perform RRM or the UE may perform RRM, discard/ignore the measurement result, considering it as invalid, and not report the measurement result to the serving cell.

According to [Method #7], information about the NES mode of not only a serving cell but also a neighbor cell may be transmitted to a UE to compensate for a problem that may occur due to the NES mode of the serving cell, or a duration in which transmission and reception of a DL/UL signal/channel to and from the neighbor cell is not expected may be determined. Therefore, enhancement of the power saving effect of the UE, the neighbor cell, and the serving cell may be expected.

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

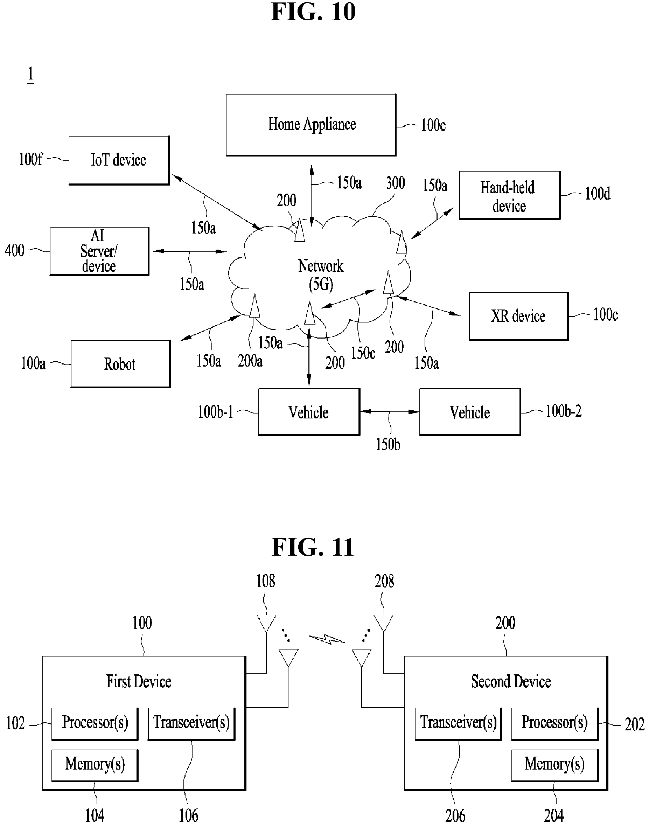

FIG. 10 illustrates a communication system 1 applied to the disclosure.

Referring to FIG. 10, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

FIG. 11 illustrates wireless devices applicable to the disclosure.

Referring to FIG. 11, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, instructions and/or operations, controlled by the processor 102 of the first wireless device 100 and stored in the memory 104 of the first wireless device 100, according to an embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 102 may receive information related to an NES operation of a BS through the transceiver 106. For example, the information related to the NES operation may be information related to ON/OFF of one or more time durations or information related to whether the BS operates in the NES mode. Alternatively, it may be information related to the periodicity of a DL/UL signal/channel according to the NES mode. For example, the processor 102 may receive the information related to the NES operation through the transceiver 106 based on at least one of [Method #1] to [Method #7].

The processor 102 may transmit and receive a DL/UL channel during one or more time durations based on the information related to the NES operation through the transceiver 106. For example, the processor 102 may transmit and receive the DL/UL channel through the transceiver 106 based on at least one of [Method #1] to [Method #7].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an embodiment of the disclosure will be described.

Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 202 may transmit information related to an NES operation of the BS through the transceiver 206. For example, the information related to the NES operation may be information related to ON/OFF of one or more time durations or information related to whether the processor 202 operates in the NES mode. Alternatively, it may be information related to the periodicity of a DL/UL signal/channel according to the NES mode. For example, the processor 202 may transmit the information related to the NES operation through the transceiver 206 based on at least one of [Method #1] to [Method #7].

The processor 202 may transmit and receive a DL/UL channel during one or more time durations based on the information related to the NES operation through the transceiver 206. For example, the processor 202 may transmit and receive the DL/UL channel through the transceiver 206 based on at least one of [Method #1] to [Method #7].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

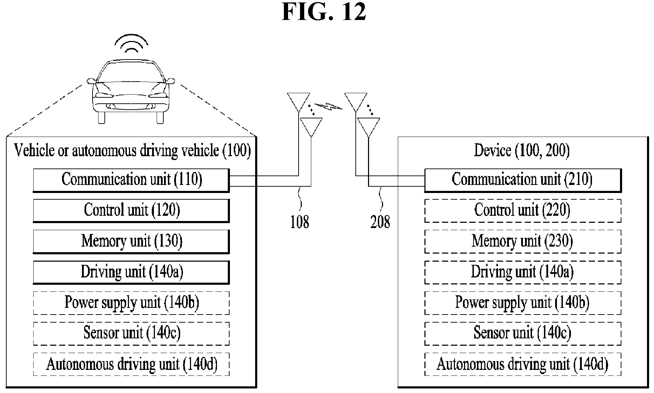

FIG. 12 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**[Industrial Applicability]**

While the above-described method of transmitting and receiving an uplink channel and a downlink channel and the apparatus therefor have been described based on an example applied to a 5G NR system, the method and apparatus are applicable to various wireless communication systems in addition to the 5G NR system.

**Claims**

1. A method of transmitting an uplink (UL) signal or receiving a downlink (DL) signal by a user equipment (UE) in a wireless communication system, the method comprising:

   receiving information related to at least one unavailable first time duration; and
   transmitting the UL signal or receiving the DL signal during at least one second time duration other than the at least one first time duration,
   wherein a transmission of the UL signal and a reception of the DL signal are not performed during the at least one first time duration, and
   wherein the information related to the at least one first time duration is received through downlink control information (DCI) or a medium access control-control element (MAC-CE).

2. The method according to claim 1, wherein the at least one first time duration is one of a plurality of unavailable first time durations, indicated by the information.

3. The method according to claim 1, wherein the at least one first time duration is at least one symbol indicated as unavailable by a slot format indicator (SFI).

4. The method according to claim 1, wherein the at least one second time duration is at least one symbol that is after expiration of a timer corresponding to the at least one first time duration.

5. The method according to claim 1, wherein based on the DL signal being a synchronization signal block (SSB) or a channel state information-reference signal (CSI-RS) or the UL signal being a physical random access channel (PRACH), the reception of the DL signal and the transmission of the UL signal are performed during the at least one first time duration.

6. The method according to claim 1, wherein based on a physical downlink control channel (PDCCH) being monitored during the at least one first time duration, a periodicity of a search space (SS) set for the at least one first time duration is greater than a periodicity of an SS set for the at least one second time duration.

7. The method according to claim 1, wherein the information related to the at least one first time duration is for indicating a pattern including the at least one first time duration and the at least one second time duration, and
   wherein information about a duration during which the pattern is applied is also received through the DCI or the MAC-CE.

8. The method according to claim 7, wherein a UL transmission or a DL reception is performed in a time resource after an ending time of the duration.

9. The method according to claim 7, wherein a UL transmission or a DL reception is performed based on a pattern different from the pattern and a duration corresponding to the different pattern, after an ending time of the duration.

10. A user equipment (UE) for transmitting an uplink (UL) signal or receiving a downlink (DL) signal in a wireless communication system, the UE comprising:

    at least one transceiver;
    at least one processor; and
    at least one memory operably connected to the at least one processor and storing instructions which when executed, cause the at least one processor to perform operations,
    wherein the operations include:

    receiving information related to at least one unavailable first time duration through the at least one transceiver; and
    transmitting the UL signal or receiving the DL signal through the at least one transceiver during at least one second time duration other than the at least one first time duration,
    wherein a transmission of the UL signal and a reception of the DL signal are not performed during the at least one first time duration, and
    wherein the information related to the at least one first time duration is received through downlink control information (DCI) or a medium access control-control element (MAC-CE).

11. The UE according to claim 10, wherein the at least one first time duration is one of a plurality of unavailable first time durations, indicated by the information.

12. The UE according to claim 10, wherein the at least one first time duration is at least one symbol indicated as unavailable by a slot format indicator (SFI).

13. The UE according to claim 10, wherein the at least one second time duration is at least one symbol that is after expiration of a timer corresponding to the at least one first time duration.

14. The UE according to claim 10, wherein based on the DL signal being a synchronization signal block (SSB) or a channel state information-reference signal (CSI-RS) or the UL signal being a physical random access channel (PRACH), the reception of the DL signal and the transmission of the UL signal are performed during the at least one first time duration.

15. The UE according to claim 10, wherein based on a physical downlink control channel (PDCCH) being monitored during the at least one first time duration, a periodicity of a search space (SS) set for the at least one first time duration is greater than a periodicity of an SS set for the at least one second time duration.

16. The UE according to claim 10, wherein the information related to the at least one first time duration is for indicating a pattern including the at least one first time duration and the at least one second time duration, and
    wherein information about a duration during which the pattern is applied is also received through the DCI or the MAC-CE.

17. The UE according to claim 16, wherein a UL transmission or a DL reception is performed in a time resource after an ending time of the duration.

18. The UE according to claim 16, wherein a UL transmission or a DL reception is performed based on a pattern different from the pattern and a duration corresponding to the different pattern, after an ending time of the duration.

19. A method of receiving an uplink (UL) signal or transmitting a downlink (DL) signal by a base station (BS) in a wireless communication system, the method comprising:

transmitting information related to at least one unavailable time duration; and
receiving the UL signal or transmitting the DL signal during a time duration other than the at least one time duration,
wherein a reception of the UL signal and a transmission of the DL signal are not performed during the at least one time duration, and
wherein the information related to the at least one time duration is transmitted through downlink control information (DCI) or a medium access control-control element (MAC-CE).

20. A base station (BS) for receiving an uplink (UL) signal or transmitting a downlink (DL) signal in a wireless communication system, the BS comprising:

at least one transceiver;
at least one processor; and
at least one memory operably connected to the at least one processor and storing instructions which when executed, cause the at least one processor to perform operations,
wherein the operations include:

transmitting information related to at least one unavailable time duration through the at least one transceiver; and
receiving the UL signal or transmitting the DL signal through the at least one transceiver during a time duration other than the at least one time duration,
wherein a reception of the UL signal and a transmission of the DL signal are not performed during the at least one time duration, and
wherein the information related to the at least one time duration is transmitted through downlink control information (DCI) or a medium access control-control element (MAC-CE).

21. A computer-readable storage medium including at least one computer program causing at least one processor to perform operations,
wherein the operations include:

receiving information related to at least one unavailable time duration; and
transmitting the UL signal or receiving the DL signal during a time duration other than the at least one time duration,
wherein a transmission of the UL signal and a reception of the DL signal are not performed during the at least one time duration, and
wherein the information related to the at least one time duration is received through downlink control information (DCI) or a medium access control-control element (MAC-CE).

22. An apparatus for transmitting an uplink (UL) signal or receiving a downlink (DL) signal in a wireless communication system, the apparatus comprising:

at least one processor; and
at least one memory operably connected to the at least one processor and storing instructions which when executed, cause the at least one processor to perform operations,
wherein the operations include:

receiving information related to at least one unavailable time duration; and

transmitting the UL signal or receiving the DL signal during a time duration other than the at least one time duration,

wherein a transmission of the UL signal and a reception of the DL signal are not performed during the at least one time duration, and

wherein the information related to the at least one time duration is received through downlink control information (DCI) or a medium access control-control element (MAC-CE).

# FIG. 1

INITIAL CELL SEARCH — SYSTEM INFORMATION RECEPTION — RANDOM ACCESS PROCEDURE — GENERAL DL/UL Tx/Rx S18

PSS/SSS & [DLRS] & PBCH — S11

PDCCH/ PDSCH (BCCH) — S12

PRACH — S13

PDCCH/ PDSCH — S14

PRACH — S15

PDCCH/ PDSCH — S16

PDCCH/ PDSCH — S17

PUSCH/ PUCCH

· DL/UL ACK/NACK
· UE CQI/PMI/RI RANK REPORT USING PUSCH AND PUCCH

EP 4 518 452 A1

# FIG. 2

# FIG. 3

Resource grid

A carrier
(up to 3300 subcarriers, i. e., 275 RBs)

A BWP

1 RB = 12 subcarriers

1 RE

1 subcarrier

1 symbol

l = 0 · · · · ·

k = 0

# FIG. 4

Downlink or Uplink or Flexible

( a )

0~13 Downlink     1~13 Downlink     0~13 Uplink

( b )

Downlink-Flexible-uplink     Downlink-Flexible-Uplink

( c )

# FIG. 5

# FIG. 6

| | |
|---|---|
| Receive information related to network energy saving (NES) operation of BS | S601 |
| Receive/transmit DL/UL channel during one or more time durations, based on information related to NES operation | S603 |

# FIG. 7

| | |
|---|---|
| Transmit information related to network energy saving (NES) operation of BS | S701 |
| Transmit/receive DL/UL channel during one or more time durations, based on information related to NES operation | S703 |

# FIG. 8

UE               BS

Transmit information related to network energy saving (NES) operation of BS     S801

Receive/transmit DL/UL channel during one or more time durations, based on information related to NES operation     S803

# FIG. 9

Pattern#1

Pattern#2

Pattern#3

▨ : ON

▢ : OFF

# FIG. 10

# FIG. 11

# FIG. 12

Vehicle or autonomous driving vehicle (100)

| |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device (100, 200)

| |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

<div align="center">

**INTERNATIONAL SEARCH REPORT**

</div>

| International application No. |
| --- |
| **PCT/KR2023/005538** |

| A. | CLASSIFICATION OF SUBJECT MATTER |
| --- | --- |

**H04W 52/02**(2009.01)i; **H04W 72/23**(2023.01)i; **H04W 76/28**(2018.01)i; **H04B 7/06**(2006.01)i; **H04W 24/08**(2009.01)i; **H04L 5/00**(2006.01)i

According to International Patent Classification (IPC) or to both national classification and IPC

| B. | FIELDS SEARCHED |
| --- | --- |

Minimum documentation searched (classification system followed by classification symbols)

H04W 52/02(2009.01); H04L 5/00(2006.01); H04L 5/16(2006.01); H04W 48/14(2009.01); H04W 48/16(2009.01); H04W 72/04(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시간 구간 관련 정보(Time Interval Related Information), 업링크 신호(Uplink Signal), 다운링크 신호(Downlink Signal), DCI(Downlink Control Information), MAC-CE(Medium Access Control – Control Element)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022-031113 A1 (LG ELECTRONICS INC.) 10 February 2022 (2022-02-10) <br> See paragraphs [0146], [0304]-[0306] and [0364]-[0365]; claims 1, 5 and 16; and figure 8. | 1-22 |
| Y | KR 10-2021-0118915 A (VIVO MOBILE COMMUNICATION CO., LTD.) 01 October 2021 (2021-10-01) <br> See paragraphs [0025]-[0027]; and claim 3. | 1-22 |
| A | US 2021-0068084 A1 (BEIJING XIAOMI MOBILE SOFTWARE CO., LTD.) 04 March 2021 (2021-03-04) <br> See paragraphs [0096]-[0107]; and figure 2A. | 1-22 |
| A | US 2021-0400567 A1 (ZTE CORPORATION) 23 December 2021 (2021-12-23) <br> See claims 82-91. | 1-22 |

| ✓ Further documents are listed in the continuation of Box C. | | ✓ See patent family annex. | |
| --- | --- | --- | --- |

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **03 August 2023** | **04 August 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/005538** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2021-160647 A1 (TELEFONAKTIEBOLAGET LM ERICSSON (PUBL)) 19 August 2021 (2021-08-19)<br>      See claims 1-25. | 1-22 |

Form PCT/ISA/210 (second sheet) (July 2022)

# EP 4 518 452 A1

| | INTERNATIONAL SEARCH REPORT<br>Information on patent family members | | International application No.<br>**PCT/KR2023/005538** |

| Patent document<br>cited in search report | | | Publication date<br>(day/month/year) | Patent family member(s) | | | Publication date<br>(day/month/year) |
|---|---|---|---|---|---|---|---|
| WO | 2022-031113 | A1 | 10 February 2022 | CN | 115769539 | A | 07 March 2023 |
| | | | | EP | 4195575 | A1 | 14 June 2023 |
| | | | | JP | 2023-529650 | A | 11 July 2023 |
| | | | | KR | 10-2023-0004784 | A | 06 January 2023 |
| KR | 10-2021-0118915 | A | 01 October 2021 | CN | 111278171 | A | 12 June 2020 |
| | | | | CN | 111278171 | B | 17 May 2022 |
| | | | | EP | 3920604 | A1 | 08 December 2021 |
| | | | | EP | 3920604 | A4 | 23 March 2022 |
| | | | | JP | 2022-523736 | A | 26 April 2022 |
| | | | | JP | 7229372 | B2 | 27 February 2023 |
| | | | | KR | 10-2473025 | B1 | 01 December 2022 |
| | | | | US | 2021-0360736 | A1 | 18 November 2021 |
| | | | | WO | 2020-156431 | A1 | 06 August 2020 |
| US | 2021-0068084 | A1 | 04 March 2021 | CN | 108513732 | A | 07 September 2018 |
| | | | | CN | 108513732 | B | 01 July 2022 |
| | | | | US | 11483819 | B2 | 25 October 2022 |
| | | | | WO | 2019-134098 | A1 | 11 July 2019 |
| US | 2021-0400567 | A1 | 23 December 2021 | CA | 3126402 | A1 | 20 February 2020 |
| | | | | CN | 113316923 | A | 27 August 2021 |
| | | | | CN | 115225228 | A | 21 October 2022 |
| | | | | CN | 115225228 | B | 18 April 2023 |
| | | | | EP | 3909213 | A1 | 17 November 2021 |
| | | | | EP | 3909213 | A4 | 27 July 2022 |
| | | | | KR | 10-2021-0111852 | A | 13 September 2021 |
| | | | | SG | 11202107611 | QA | 30 August 2021 |
| | | | | WO | 2020-034571 | A1 | 20 February 2020 |
| WO | 2021-160647 | A1 | 19 August 2021 | CO | 2022012131 | A2 | 30 August 2022 |
| | | | | EP | 4104361 | A1 | 21 December 2022 |
| | | | | KR | 10-2022-0141852 | A | 20 October 2022 |
| | | | | US | 2023-0078444 | A1 | 16 March 2023 |

Form PCT/ISA/210 (patent family annex) (July 2022)

42